# EUROPEAN PATENT APPLICATION

(11) **EP 4 787 569 A1**
(43) Date of publication of application: **05.08.2026**
(21) Application number: 25864545.6
(22) Date of filing: 17.09.2025
(51) Int. Cl.: H01M 50/204, H01M 50/289

(54) **BATTERY PACK AND MANUFACTURING METHOD FOR BATTERY PACK**

(30) Priority: 03.12.2024 KR 20240177098
(71) Applicant: LG Energy Solution, Ltd., Seoul 07335 (KR)
(72) Inventor: HUR, Nam Hoon, Yuseong-Gu, Daejeon 34122 (KR); SHIN, Ju Hwan, Yuseong-Gu, Daejeon 34122 (KR)
(74) Representative: Plasseraud IP
(86) International application number: PCT/KR2025/014458
(87) International publication number: WO 2026/121494

(57) **Abstract**

According to exemplary embodiments, a battery pack is provided. The battery pack may include: a base plate; a battery cell assembly on the base plate, wherein the battery cell assembly includes a cell stack including battery cells stacked in a first direction, and an end plate on a side surface of the cell stack in the first direction; and a cross beam on the base plate and extending in a second direction perpendicular to the first direction. The end plate may include a plurality of first pins on a surface facing the cross beam, and first spacers extending from each of the first pins in a third direction perpendicular to each of the first and second directions. The cross beam may include a plurality of first slots penetrating an outer wall facing the end plate, and first recesses extending from each of the first slots in the third direction.

## Description

### [Technical Field]

The present disclosure relates to a battery pack and a battery pack manufacturing method. This application claims the benefit of Korean Patent Application No. 10-2024-0177098, filed on December 3, 2024, the disclosure of which is incorporated herein by reference.

### [Background]

Secondary batteries, unlike primary batteries, are capable of being charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has been dramatically reduced, and as the driving range of battery electric vehicles (BEVs) has increased to a level equivalent to that of fuel vehicles, the main applications of secondary batteries are shifting from mobile devices to mobility.

The trend in technology development for mobility secondary batteries is the improvement of energy density and safety. Here, the energy density of a secondary battery is the value obtained by dividing the maximum electrical energy that the secondary battery can store by the mass of the secondary battery. Since the high energy density of secondary batteries is directly related to the driving efficiency and range of mobility, various studies are being conducted to improve the energy density of secondary batteries.

One of the powerful solutions for increasing the energy density of secondary batteries is the module-less type battery pack (or cell-to-pack structure). In module-less type battery packs, the module covering the battery cells is omitted, which can dramatically reduce the mass of the battery pack.

### [Summary]

### [Technical Problem]

The problem that the technical concept of the present disclosure seeks to solve is to provide a battery pack with high energy density and simplified assembly process, and a method for manufacturing the battery pack.

### [Technical Solution]

According to exemplary embodiments of the present disclosure for solving the above-mentioned problem, a battery pack is provided. The battery pack may include: a base plate; a battery cell assembly on the base plate, wherein the battery cell assembly includes a cell stack including battery cells stacked in a first direction, and an end plate on a side surface of the cell stack in the first direction; and a cross beam on the base plate and extending in a second direction perpendicular to the first direction. The end plate may include a plurality of first pins on a surface of the end plate facing the cross beam, and first spacers extending from each of the first pins in a third direction perpendicular to each of the first and second directions. The cross beam may include a plurality of first slots penetrating an outer wall of the cross beam facing the end plate, and first recesses extending from each of the first slots in the third direction.

Each of the first pins may be configured to be coupled to a corresponding one of the first slots. Each of the first spacers may be configured to be coupled to a corresponding one of the first recesses.

A width of each of the first pins in the first direction may be different from a width of each of the first spacers in the first direction.

A width of each of the first pins in the first direction may be greater than a width of each of the first spacers in the first direction.

Each of the first spacers may have a width in the first direction corresponding to a depth of each of the first recesses in the first direction.

The end plate may further include a plurality of second pins on the surface of the end plate facing the cross beam, and second spacers extending from each of the second pins in the third direction. The cross beam may further include a plurality of second slots penetrating the outer wall of the cross beam facing the end plate; and second recesses extending from each of the second slots in the third direction. Each of the second pins may be positioned at a different level in the third direction from each of the first pins. Each of the second slots may be positioned at a different level in the third direction from each of the first slots.

The first pins and the second pins may be arranged alternately. The first spacers and the second spacers may be arranged alternately. The first slots and the second slots may be arranged alternately. The first recesses and the second recesses may be arranged alternately.

A length of each of the second spacers in the third direction may be smaller than a length of each of the first spacers in the third direction. A length of each of the second recesses in the third direction may be smaller than a length of each of the first recesses in the third direction.

Each of the first spacers and each of the first recesses may extend in a direction away from the base plate.

Each of the first recesses may include an expansion part in which the width in the second direction increases in a direction toward an end thereof distant from the base plate.

The battery pack may further include a welding layer between the cross beam and the base plate.

According to exemplary embodiments of the present disclosure for solving the above-mentioned problem, a battery pack manufacturing method is provided. The method may include: applying a compressive force to a battery cell assembly in a direction in which end plates of the battery cell assembly approach each other; aligning the battery cell assembly with respect to a pack housing so that pins of the end plates of the battery cell assembly and recesses of cross beams of the battery pack are aligned in a vertical direction; and introducing the battery cell assembly into an accommodation space of the battery pack such that the pins of each of the end plates move along the recesses of each of the cross beams.

After the step of introducing the battery cell assembly into the accommodation space, the method may further include inserting the pins of each of the end plates into corresponding ones of slots of the cross beams connected to each of the recesses.

After the step of introducing the battery cell assembly into the accommodation space, and before the step of inserting the pins of the end plate into the slots of the cross beams, the method may further include releasing the compressive force applied to the battery cell assembly.

In the step of inserting the pins of the end plate into the slots of the cross beams, spacers respectively connected to the pins of the end plates may be coupled to corresponding ones of the recesses of the cross beams.

### [Advantageous Effects]

According to exemplary embodiments of the present disclosure, by providing pins having a complementary shape to the slots of the cross beam of the battery pack in the battery cell assembly, the assembly process of the battery pack can be simplified and the battery pack can be made lighter.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a top view showing a battery pack according to exemplary embodiments.
FIG. 2 is a perspective view showing a pack housing according to exemplary embodiments.
FIG. 3 is a front view showing a cross beam according to exemplary embodiments.
FIG. 4 is a partial enlarged view showing a cross beam according to exemplary embodiments.
FIG. 5 is a cross-sectional view showing a cross beam according to exemplary embodiments.
FIG. 6 is a perspective view showing a battery cell assembly according to exemplary embodiments.
FIG. 7 is a perspective view showing an end plate according to exemplary embodiments.
FIG. 8 is a flowchart showing a battery pack manufacturing method according to exemplary embodiments.
FIG. 9 is a cross-sectional view showing a manufacturing process of a battery pack according to exemplary embodiments.
FIG. 10 is a perspective view showing a manufacturing process of a battery pack according to exemplary embodiments.
FIG. 11 is a cross-sectional view showing a manufacturing process of a battery pack according to exemplary embodiments.
FIG. 12 is a partial enlarged view showing a manufacturing process of a battery pack according to exemplary embodiments.
FIG. 13 is a partial enlarged view showing a manufacturing process of a battery pack according to exemplary embodiments.
FIG. 14 is a cross-sectional view showing a manufacturing process of a battery pack according to exemplary embodiments.
FIG. 15 is a partial enlarged view showing a manufacturing process of a battery pack according to exemplary embodiments.
FIG. 16 is a partial enlarged view showing a manufacturing process of a battery pack according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing the disclosure.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

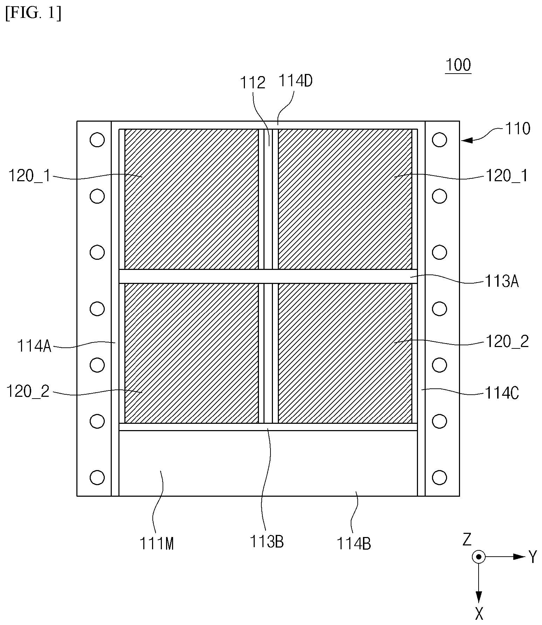

FIG. 1 is a top view showing a battery pack 100 according to exemplary embodiments.

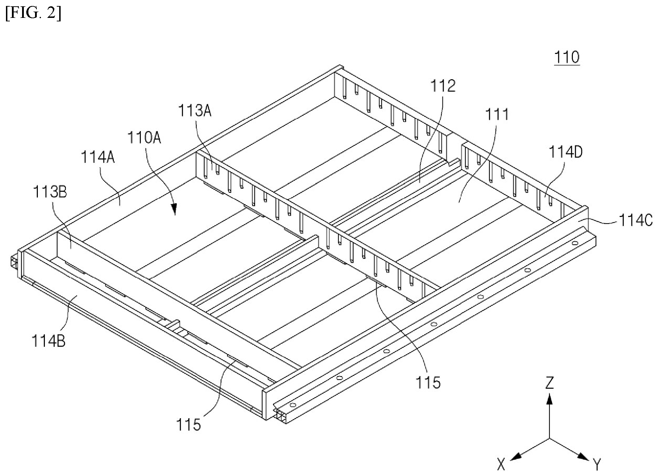

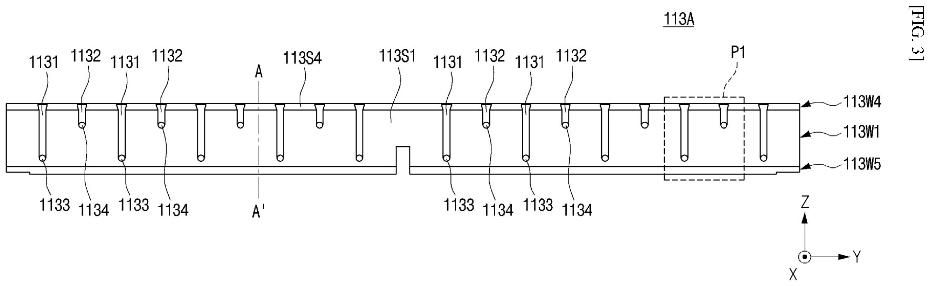

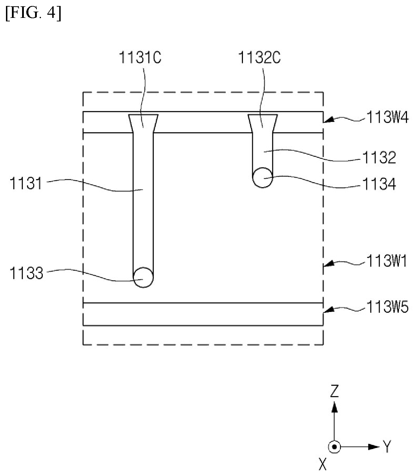

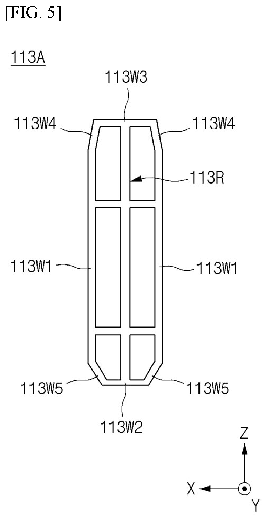

FIG. 2 is a perspective view showing a pack housing 110 according to exemplary embodiments. FIG. 3 is a front view showing a cross beam 113A according to exemplary embodiments. FIG. 4 is a partial enlarged view showing a cross beam 113A according to exemplary embodiments. FIG. 4 shows an enlarged view of portion P1 in FIG. 3. FIG. 5 is a cross-sectional view showing a cross beam 113A according to exemplary embodiments. FIG. 5 shows a cross-section along line A-A' in FIG. 3.

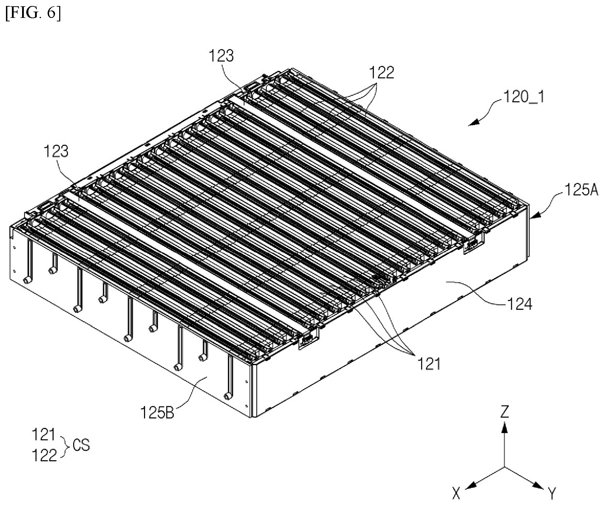

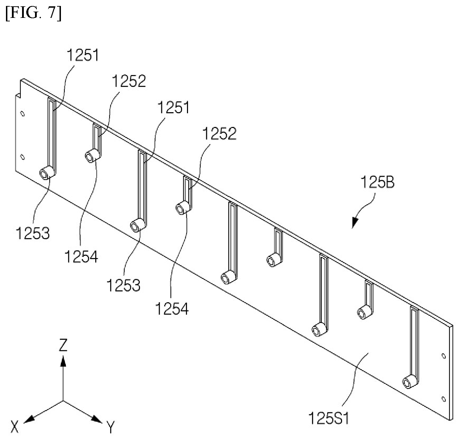

FIG. 6 is a perspective view showing a battery cell assembly 120_1 according to exemplary embodiments. FIG. 7 is a perspective view showing an end plate 125B of a battery cell assembly 120_1 according to exemplary embodiments.

Referring to FIGS. 1 to 7, a battery pack 100 may include a pack housing 110 and battery cell assemblies 120_1, 120_2. The battery pack 100 may be a final form of a battery system mounted on mobility or the like.

The pack housing 110 may include a base plate 111, a center beam 112, cross beams 113A, 113B, and side walls 114A, 114B, 114C, 114D. The pack housing 110 may provide an accommodation space 110A for disposing each of the battery cell assemblies 120_1, 120_2.

Two directions substantially parallel to the mounting surface 111M of the base plate 111 are defined as the X direction and the Y direction, and a direction substantially perpendicular to the mounting surface 111M of the base plate 111 is defined as the Z direction. Each of the X direction, Y direction, and Z direction may be substantially perpendicular to each other. Unless otherwise stated, the definition of directions is the same for the following drawings.

The center beam 112 may be on the base plate 111. According to exemplary embodiments, the center beam 112 may protrude from the mounting surface 111M of the base plate 111. The center beam 112 may extend in the X direction. The center beam 112 may separate the battery cell assemblies 120_1, 120_2 in the Y direction.

The cross beams 113A, 113B may be on the base plate 111. Each of the cross beams 113A, 113B may intersect with the center beam 112. Each of the cross beams 113A, 113B may extend in the Y direction. Each of the cross beams 113A, 113B may separate the battery cell assemblies 120_1, 120_2 in the X direction.

According to exemplary embodiments, each of the cross beams 113A, 113B may have a hollow structure. Due to the hollow structure of the cross beams 113A, 113B, weight reduction of the battery pack 100 is possible. In addition, when heat is generated in one of the battery cell assemblies 120_1, 120_2, the generated heat can be prevented or suppressed from propagating to adjacent battery cell assemblies 120_1, 120_2 through the cross beams 113A, 113B.

Although the cross beam 113A is illustrated in FIGS. 3 to 5, the description of the cross beam 113A to be described later can be applied equally or similarly to the cross beam 113B and the side wall 114D.

The cross beam 113A may include outer walls 113W1, 113W2, 113W3, 113W4, 113W5. The cross beams 113A may include a rib structure 113R in an internal space defined by the outer walls 113W1, 113W2, 113W3, 113W4, 113W5. The rib structure 113R may be a configuration for reinforcing the rigidity of the cross beam 113A.

Each of the first outer walls 113W1 may face the battery cell assemblies 120_1, 120_2. Each of the first outer walls 113W1 may be substantially perpendicular to the base plate 111.

The second outer wall 113W2 may be on the base plate 111. A welding layer 115 may be between the second outer wall 113W2 and the base plate 111. The third outer wall 113W3 may be substantially parallel to the second outer wall 113W2, but may be spaced apart from the base plate 111 in the Z direction.

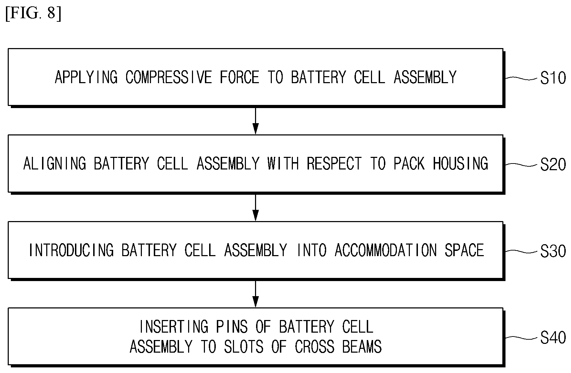

Each of the fourth outer walls 113W4 may connect each of the first outer walls 113W1 and the third outer wall 113W3. Each of the fourth outer walls 113W4 may have a shape inclined toward the center of the cross beam 113A. Due to the fourth outer walls 113W4 of the cross beam 113A, the accommodation space 110A of the pack housing 110 may have an extended width in the X direction at the upper part in the Z direction. Accordingly, in the manufacturing process of the battery pack 100 described later in FIGS. 8 to 16, misalignment in the X direction that may occur when introducing each of the battery cell assemblies 120_1, 120_2 into the accommodation space 110A of the pack housing 110 can be adjusted.

Each of the fifth outer walls 113W5 may connect each of the first outer walls 113W1 and the second outer wall 113W2. However, the shape of the cross beam 113A is not limited thereto. According to other embodiments, the cross beam 113A may not include the fifth outer walls 113W5, and each of the first outer walls 113W1 may be directly connected to the second outer wall 113W2.

The width of the cross beam 113A in the X direction may be greater than the width of the cross beam 113B in the X direction. The width of the cross beam 113A in the X direction may be greater than the width of the side wall 114D in the X direction. According to exemplary embodiments, the width of the cross beam 113B in the X direction may be substantially the same as the width of the side wall 114D in the X direction.

The side walls 114A, 114B, 114C, 114D may be connected to the base plate 111 and may be substantially perpendicular to the base plate 111. The side walls 114A, 114B, 114C, 114D may extend along the edge of the base plate 111. The side walls 114A, 114B, 114C, 114D may surround the center beam 112, the cross beams 113A, 113B, and the battery cell assemblies 120_1, 120_2.

According to exemplary embodiments, the cross beams 113A may be coupled to the base plate 111 and the side walls 114A, 114C by a welding layer 115. According to exemplary embodiments, the cross beams 113B may be coupled to the base plate 111 and the side walls 114A, 114C by a welding layer 115. The welding layer 115 may be between the cross beam 113A and the base plate 111, and between the cross beam 113A and the side walls 114A, 114C. The welding layer 115 may be between the cross beam 113B and the base plate 111, and between the cross beam 113B and the side walls 114A, 114C. The welding layer 115 may be continuous along the surface of each of the cross beams 113A, 113B, or may include weld patterns spaced along the surface of each of the cross beams 113A, 113B.

According to exemplary embodiments, the side wall 114D may be coupled to the base plate 111 and the side walls 114A, 114C by a welding layer 115. The welding layer 115 may be between the side wall 114D and the base plate 111, and between the side wall 114D and the side walls 114A, 114C. The welding layer 115 may be continuous along the surface of the side wall 114D, or may include weld patterns spaced along the surface of the side wall 114D.

Each of the cross beams 113A, 113B and the side wall 114D may include first recesses 1131, second recesses 1132, first slots 1133, and second slots 1134. The first recesses 1131, second recesses 1132, first slots 1133, and second slots 1134 may be configurations to be coupled to each of the battery cell assemblies 120_1, 120_2.

The cross beam 113A may include first recesses 1131, second recesses 1132, first slots 1133, and second slots 1134 on both side surfaces respectively facing the battery cell assemblies 120_1, 120_2. The cross beam 113B may include first recesses 1131, second recesses 1132, first slots 1133, and second slots 1134 on one side surface facing the battery cell assemblies 120_1, 120_2. The side wall 114D may include first recesses 1131, second recesses 1132, first slots 1133, and second slots 1134 on one side surface facing the battery cell assemblies 120_1, 120_2.

Hereinafter, with reference to FIGS. 2 to 5, the first recesses 1131, second recesses 1132, first slots 1133, and second slots 1134 on one side surface of the cross beam 113A will be described. The details described below can be applied equally or similarly to the other side surface of the cross beam 113A, one side surface of the cross beam 113B, and one side surface of the side wall 114D.

The cross beam 113A may include first recesses 1131, second recesses 1132, first slots 1133, and second slots 1134 on the first outer wall 113W1. Each of the first recesses 1131 may be connected to each of the first slots 1133. Each of the second recesses 1132 may be connected to each of the second slots 1134.

Each of the first slots 1133 and the second slots 1134 may be holes penetrating the first outer wall 113W1. Each of the first slots 1133 may be positioned at a different level in the Z direction from each of the second slots 1134. The first slots 1133 may be closer to the base plate 111 in the Z direction than the second slots 1134. The first slots 1133 and the second slots 1134 may be arranged alternately with each other in the Y direction. Each of the first slots 1133 may be positioned at substantially the same level in the Z direction. Each of the second slots 1134 may be positioned at substantially the same level in the Z direction.

Each of the first recesses 1131 and the second recesses 1132 may be recessed from the side surface 113S1 of the first outer wall 113W1. Each of the first recesses 1131 may extend from each of the first slots 1133 in the Z direction. Each of the first recesses 1131 may extend in a direction away from the base plate 111. Each of the second recesses 1132 may extend from each of the second slots 1134 in the Z direction. Each of the second recesses 1132 may extend in a direction away from the base plate 111. Each of the first recesses 1131 and each of the second recesses 1132 may extend to the upper end part of the cross beam 113A in the Z direction. The first recesses 1131 and the second recesses 1132 may be arranged alternately with each other in the Y direction.

A length of each of the first recesses 1131 in the Z direction may be different from a length of each of the second recesses 1132 in the Z direction. The length of each of the second recesses 1132 in the Z direction may be smaller than the length of each of the first recesses 1131 in the Z direction. The length of each of the first recesses 1131 in the Z direction may be substantially the same. The length of each of the second recesses 1132 in the Z direction may be substantially the same.

Each of the first recesses 1131 may include an expansion part 1131C. Each of the first recesses 1131 may include an expansion part 1131C at an end distant from the base plate 111 of each of the first recesses 1131. The expansion part 1131C of each of the first recesses 1131 may be on the fourth outer wall 113W4. The expansion part 1131C may be recessed from the surface 113S4 of the fourth outer wall 113W4. The width of the expansion part 1131C in the Y direction may be greater than the width of each of the first recesses 1131 on the first outer wall 113W1 in the Y direction. According to exemplary embodiments, the expansion part 1131C may have a width in the Y direction that increases as it approaches the third outer wall 113W3.

Each of the second recesses 1132 may include an expansion part 1132C. Each of the second recesses 1132 may include an expansion part 1132C at an end distant from the base plate 111. The expansion part 1132C of each of the second recesses 1132 may be on the fourth outer wall 113W4. The expansion part 1132C may be recessed from the surface 113S4 of the fourth outer wall 113W4. The width of the expansion part 1132C in the Y direction may be greater than the width of each of the second recesses 1132 on the first outer wall 113W1 in the Y direction. According to exemplary embodiments, the expansion part 1132C may have a width in the Y direction that increases as it approaches the third outer wall 113W3.

As the cross beam 113A includes the expansion parts 1131C, 1132C, in the manufacturing process of the battery pack 100 described later in FIGS. 8 to 16, misalignment in the Y direction that may occur when introducing each of the battery cell assemblies 120_1, 120_2 into the accommodation space 110A of the pack housing 110 can be adjusted.

Each of the battery cell assemblies 120_1, 120_2 may include battery cells 121, pads 122, cables 123, and end plates 124, 125A, 125B. According to exemplary embodiments, each of the battery cell assemblies 120_1, 120_2 may not include a module frame.

The plurality of battery cells 121 and the plurality of pads 122 may form a cell stack CS. According to exemplary embodiments, each of the plurality of battery cells 121 may be bidirectional cells. That is, the positive terminal of the plurality of battery cells 121 may be disposed at one end of each, and the negative terminal of the plurality of battery cells 121 may be disposed at the other end of each. A person skilled in the art will be able to easily reach an embodiment in which each of the plurality of battery cells 121 is a unidirectional cell based on what is described herein.

Each of the plurality of battery cells 121 may include an electrode assembly, electrolyte, and a case covering them. The case may be any one of a pouch case, a cylindrical case, and a prismatic case. The pouch case may include an aluminum laminate sheet. The prismatic case and the cylindrical case may include a metal material such as aluminum. The prismatic case may have a rectangular pillar shape. The cylindrical case may have a cylindrical shape.

The electrode assembly embedded in the case includes a positive electrode, a negative electrode, and a separator interposed between the positive electrode and the negative electrode. The electrode assembly may be either a jelly-roll type or a stack-type depending on the assembly form. The jelly-roll type electrode assembly may include a winding structure of a positive electrode, a negative electrode, and a separator interposed between the positive electrode and the negative electrode. The stack-type electrode assembly includes a plurality of positive electrodes, a plurality of negative electrodes, and a plurality of separators interposed between them, which are sequentially stacked. According to exemplary embodiments, a plurality of battery cells 121 connected in parallel may constitute a plurality of banks, and the plurality of banks may be connected in series. The output current of each of the battery cell assemblies 120_1, 120_2 may be determined according to the number of battery cells 121 included in each of the plurality of banks. The output voltage of each of the battery cell assemblies 120_1, 120_2 may be determined according to the number of the plurality of banks connected in series with each other.

The plurality of pads 122 may be interposed between the plurality of battery cells 121. The plurality of pads 122 may include a compressible material. The plurality of pads 122 may absorb swelling of the plurality of battery cells 121.

According to exemplary embodiments, the plurality of pads 122 may be thermal barriers. According to exemplary embodiments, each of the plurality of pads 122 may have a high melting temperature and low thermal conductivity. According to exemplary embodiments, each of the plurality of pads 122 may include flame-retardant materials such as ceramics and coated glass materials. According to exemplary embodiments, the plurality of pads 122 may be configured to release fire retarding material and fire extinguishing agent in the event of a thermal runaway event.

In this example, the battery cell assemblies 120_1, 120_2 are arranged in 2 rows and 2 columns. Accordingly, it can be said that the battery cell assemblies 120_1, 120_2 are arranged in a 2 * 2 configuration. A person skilled in the art will be able to easily reach a battery pack including battery cell assemblies 120_1, 120_2 arranged in M * N based on what is described herein. Here, M and N are each any integer of 2 or more.

The end plates 124, 125A, 125B may surround the cell stack CS.

The end plates 124 may be on both side surfaces of the cell stack CS in the Y direction. The end plates 124 may be spaced apart from each other with the cell stack CS therebetween.

The battery pack 100 may further include sensor modules that measure the state of each of the battery cells 121. According to exemplary embodiments, the sensor modules may be between the cell stack CS and the end plates 124. According to exemplary embodiments, the sensor modules may be coupled to the end plates 124 by welding or the like.

The sensor modules may each include a measurement circuit that is connected to the leads of each of the battery cells 121 and measures state data such as voltage or temperature of each of the battery cells 121. The measurement circuits of the end plates 124 may be connected to each other by cables 123. According to exemplary embodiments, the cables 123 may be flexible flat cables (FFC).

The measurement circuits may be respectively connected to the positive electrode and negative electrode of each of the battery cells 121 to measure voltage. The cables 123 may be configured to read voltage data collected at the positive electrode and negative electrode of each of the battery cells 121 and transmit it to a battery management system (BMS). The BMS may monitor and control the overall state of each of the battery cell assemblies 120_1, 120_2 based on data collected through the sensor modules. The BMS may be configured to detect voltage imbalance based on such data, perform cell balancing, and maintain battery safety and efficiency.

The end plates 125A, 125B may be on both side surfaces of the cell stack CS in the X direction. The end plates 125A, 125B may be spaced apart from each other with the cell stack CS therebetween. The end plates 125A, 125B may be fixed to the cell stack CS by an adhesive material or the like.

Each of the end plates 125A, 125B may include first spacers 1251, second spacers 1252, first pins 1253, and second pins 1254. Each of the first spacers 1251, second spacers 1252, first pins 1253, and second pins 1254 may be configurations to be coupled to the first recesses 1131, second recesses 1132, first slots 1133, and second slots 1134 of the pack housing 1101 respectively.

Each of the first spacers 1251 may be coupled with each of the first recesses 1131. Each of the first spacers 1251 may have a complementary shape to each of the first recesses 1131. Each of the second spacers 1252 may be coupled with each of the second recesses 1132. Each of the second spacers 1252 may have a complementary shape to each of the second recesses 1132. Each of the first pins 1253 may be coupled with each of the first slots 1133. Each of the first pins 1253 may have a complementary shape to each of the first slots 1133. Each of the second pins 1254 may be coupled with each of the second slots 1134. Each of the second pins 1254 may have a complementary shape to each of the second slots 1134.

The first spacers 1251, second spacers 1252, first pins 1253, and second pins 1254 may be on the outer surface 125S1 of the end plate 125B. Each of the first pins 1253 may be connected to each of the first spacers 1251. Each of the second pins 1254 may be connected to each of the second spacers 1252.

Each of the first pins 1253 may be positioned at a different level in the Z direction from each of the second pins 1254. The first pins 1253 may be closer to the base plate 111 in the Z direction than the second pins 1254. The first pins 1253 and the second pins 1254 may be arranged alternately with each other in the Y direction. Each of the first pins 1253 may be positioned at substantially the same level in the Z direction. Each of the second pins 1254 may be positioned at substantially the same level in the Z direction.

Each of the first pins 1253 and the second pins 1254 may have a hollow ring shape. However, the shape of the first pins 1253 and the second pins 1254 is not limited thereto. In other embodiments, each of the first pins 1253 and the second pins 1254 may have a pillar shape in which the width in the Z direction changes along the X direction. In other embodiments, each of the first pins 1253 and the second pins 1254 may be cylindrical with a filled interior. In other embodiments, each of the first pins 1253 and the second pins 1254 may have a polygonal pillar shape.

Each of the first pins 1253 and the second pins 1254 may protrude from the outer surface 125S1 of the end plate 125B in the X direction. Each of the first spacers 1251 and the second spacers 1252 may protrude from the outer surface 125S1 of the end plate 125B in the X direction. A width of each of the first spacers 1251 in the X direction may be different from a width of each of the first pins 1253 in the X direction. The width of each of the first spacers 1251 in the X direction may be smaller than the width of each of the first pins 1253 in the X direction. A width of each of the second spacers 1252 in the X direction may be different from a width of each of the second pins 1254 in the X direction. The width of each of the second spacers 1252 in the X direction may be smaller than the width of each of the second pins 1254 in the X direction.

Each of the first spacers 1251 may have a width in the X direction corresponding to a depth of each of the first recesses 1131 in the X direction. According to exemplary embodiments, the width of each of the first spacers 1251 in the X direction may be substantially the same as the depth of each of the first recesses 1131 in the X direction. Each of the second spacers 1252 may have a width in the X direction corresponding to a depth of each of the second recesses 1132 in the X direction. According to exemplary embodiments, the width of each of the second spacers in the X direction may be substantially the same as the depth of each of the second recesses 1132 in the X direction. As the spacers 1251, 1252 and the recesses 1131, 1132 have complementary shapes, the battery cell assemblies 120_1, 120_2 can be coupled to the pack housing 110 with minimized gaps.

Each of the first spacers 1251 may extend from each of the first pins 1253 in the Z direction. Each of the first spacers 1251 may extend in a direction away from the base plate 111. Each of the second spacers 1252 may extend from each of the second pins 1254 in the Z direction. Each of the second spacers 1252 may extend in a direction away from the base plate 111. Each of the first spacers 1251 and each of the second spacers 1252 may extend to the upper end part of each of the end plates 125A, 125B in the Z direction. The first spacers 1251 and the second spacers 1252 may be arranged alternately with each other in the Y direction.

A length of each of the first spacers 1251 in the Z direction may be different from a length of each of the second spacers 1252 in the Z direction. The length of each of the second spacers 1251 in the Z direction may be smaller than the length of each of the first spacers 1251 in the Z direction. The length of each of the first spacers 1251 in the Z direction may be substantially the same. The length of each of the second spacers 1252 in the Z direction may be substantially the same.

The shape of the first and second spacers 1251, 1252 is not limited to the hollow shape shown in FIGS. 6 and 7. In other embodiments, each of the first and second spacers 1251, 1252 may have a plate shape.

According to exemplary embodiments of the present disclosure, the battery cell assemblies 120_1, 120_2 can be coupled to the pack housing 110 using the spacers 1251, 1252 and pins 1253, 1254 of the end plates 125A, 125B, and the recesses 1131, 1132 and slots 1133, 1134 of the pack housing 110. Compared to a method of bolt-coupling the battery cell assemblies 120_1, 120_2 to the pack housing 110, the battery pack 100 of the present disclosure can simplify the manufacturing process and reduce design constraints of the battery pack 100. In addition, weight reduction of the battery pack 100 is possible by reducing the number of parts required for assembly of the battery pack 100. The thickness of each of the end plates 125A, 125B and the cross beams 113A, 113B can be reduced, thereby improving space efficiency inside the battery pack 100 and improving energy density of the battery pack 100.

### (Second embodiment)

FIG. 8 is a flowchart showing a method for manufacturing a battery pack 100 according to exemplary embodiments.

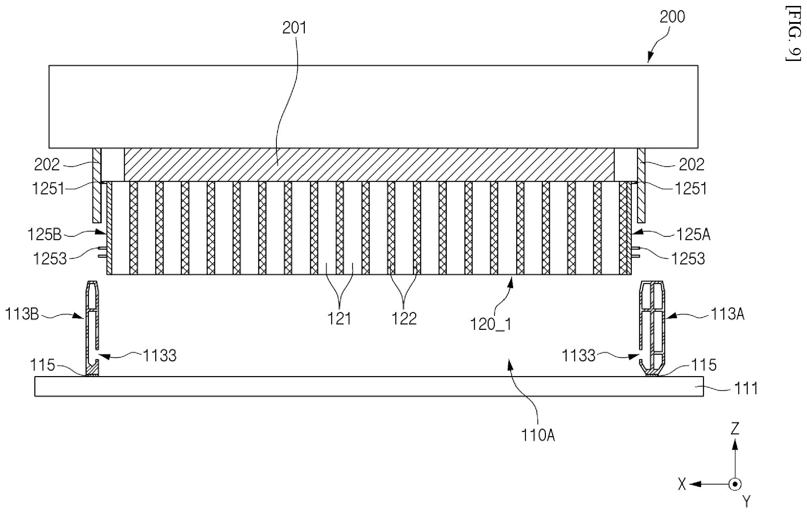

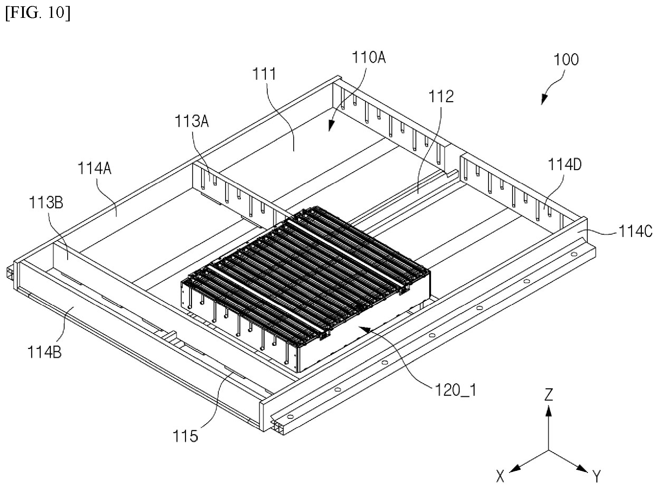

FIG. 9 is a cross-sectional view showing a manufacturing process of a battery pack 100 according to exemplary embodiments. FIG. 10 is a perspective view showing a manufacturing process of a battery pack 100 according to exemplary embodiments.

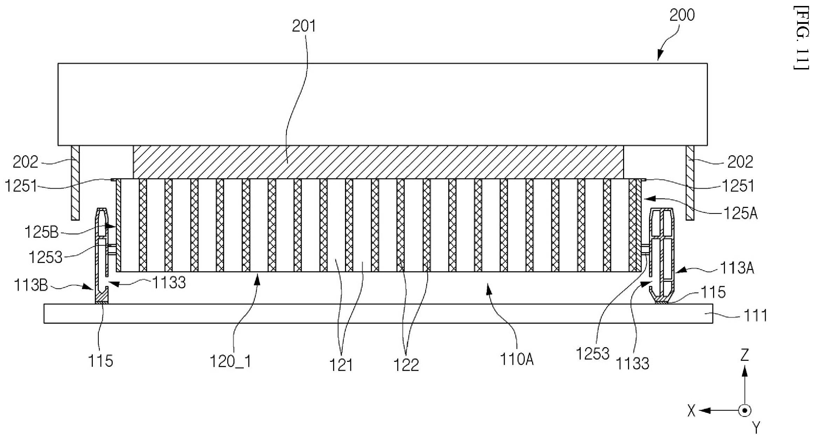

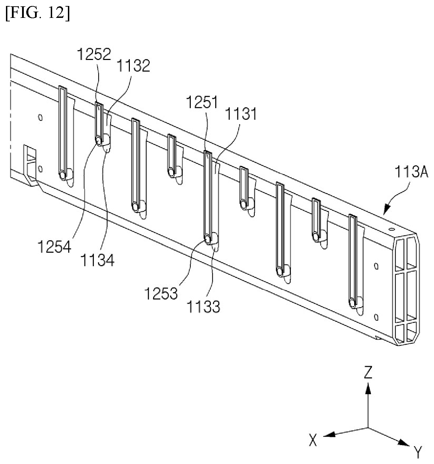

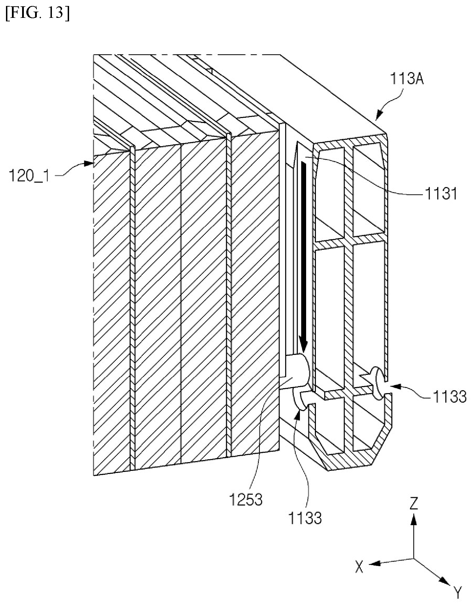

FIG. 11 is a cross-sectional view showing a manufacturing process of a battery pack 100 according to exemplary embodiments. FIGS. 12 and 13 are partial enlarged views showing a manufacturing process of a battery pack 100 according to exemplary embodiments.

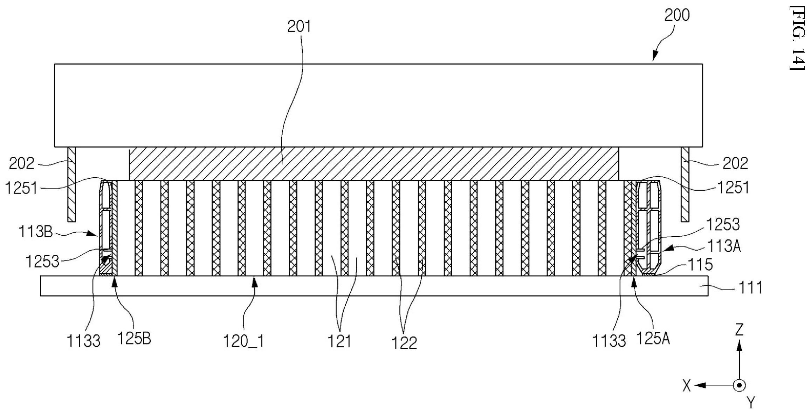

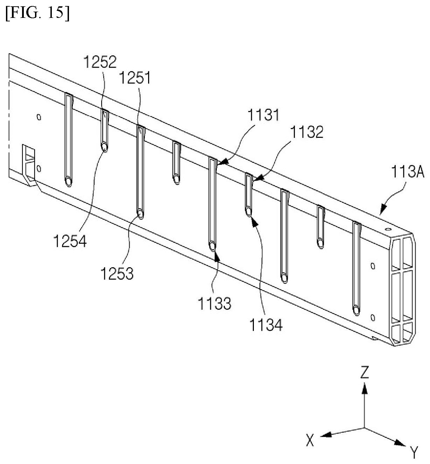

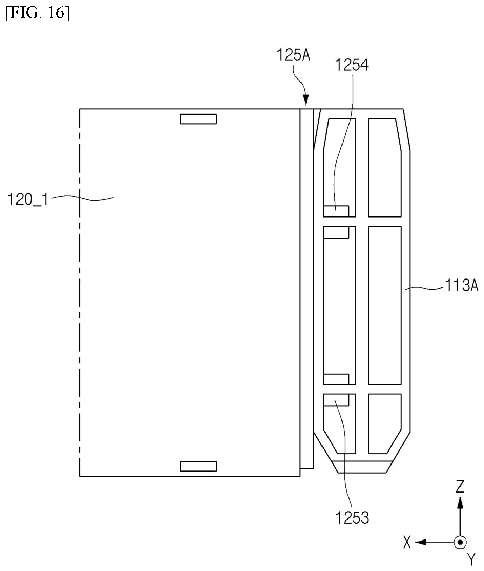

FIG. 14 is a cross-sectional view showing a manufacturing process of a battery pack 100 according to exemplary embodiments. FIGS. 15 and 16 are partial enlarged views showing a manufacturing process of a battery pack 100 according to exemplary embodiments.
Referring to FIGS. 8 and 9, in S10, a compressive force may be applied to the battery cell assembly 120_1.

Using grippers 202 of a loading device 200, a compressive force may be applied to the battery cell assembly 120_1. The grippers 202 may be configured to apply a compressive force to the battery cell assembly 120_1 in a direction in which the end plates 125A, 125B approach each other. According to exemplary embodiments, the grippers 202 may be composed of a plurality of pins. The plurality of pins may contact the first spacers 1251 of each of the end plates 125A, 125B.

The battery cell assembly 120_1 may include a plurality of pads 122 between a plurality of battery cells 121. The plurality of pads 122 may include a compressible material. The plurality of pads 122 may be compressed by the compressive force applied by the grippers 202. The length of the battery cell assembly 120_1 in the X direction may be reduced by the compressed pads 122. The length of the battery cell assembly 120_1 in the X direction (i.e., the distance between the first pins 1253 of the end plate 125A and the first pins 1253 of the end plate 125B) may be substantially equal to or smaller than the distance in the X direction between the inner surfaces of the cross beams 113A, 113B.

Referring also to FIG. 6, the end plate 125A may be spaced apart from each of the end plates 124 with a gap. The end plate 125B may be spaced apart from each of the end plates 124 with a gap. Accordingly, even when a compressive force is applied to the battery cell assembly 120_1 in a direction in which the end plates 125A, 125B approach each other, deformation of the end plates 124 due to the compressive force can be prevented.

Referring to FIGS. 8 to 10, in S20, the battery cell assembly 120_1 may be aligned with respect to the accommodation space 110A of the pack housing 110.

The battery cell assembly 120_1 may be fixed to the loading device 200. The suction part 201 of the loading device 200 may be configured to apply vacuum pressure to the battery cell assembly 120_1 to fix the battery cell assembly 120_1 to the loading device 200.

The loading device 200 may move the battery cell assembly 120_1 to the upper part of the accommodation space 110A of the pack housing 110. Referring to FIGS. 1 to 7, each of the first pins 1253 of the end plate 125A of the battery cell assembly 120_1 may be aligned with each of the first recesses 1131 of the cross beam 113A in the Z direction. Each of the second pins 1254 of the end plate 125A of the battery cell assembly 120_1 may be aligned with each of the second recesses 1132 of the cross beam 113A in the Z direction. Each of the first pins 1253 of the end plate 125B of the battery cell assembly 120_1 may be aligned with each of the first recesses 1131 of the cross beam 113B in the Z direction. Each of the second pins 1254 of the end plate 125B of the battery cell assembly 120_1 may be aligned with each of the second recesses 1132 of the cross beam 113B in the Z direction.

Referring to FIGS. 8 and 11 to 13, in S30, the battery cell assembly 120_1 may be introduced into the accommodation space 110A between the cross beams 113A, 113B.

The battery cell assembly 120_1 may be introduced to the intended position within the accommodation space 110A by the recesses 1131, 1132, slots 1133, 1134, spacers 1251, 1252, and pins 1253, 1254.

The first pins 1253 of the end plate 125A may move along the first recesses 1131 of the cross beam 113A. The second pins 1254 of the end plate 125A may move in the Z direction along the second recesses 1132 of the cross beam 113A. Similarly, the first pins 1253 of the end plate 125B may move along the first recesses (not shown) of the cross beam 113B. The second pins (not shown) of the end plate 125B may move along the second recesses (not shown) of the cross beam 113B. The battery cell assembly 120_1 may be moved in a direction approaching the base plate 111.

According to exemplary embodiments, after the first pins 1253 of the battery cell assembly 120_1 contact the first recesses 1131, each of the grippers 202 may retract in the X direction away from the facing end plates 125A, 125B. The compressive force applied to the battery cell assembly 120_1 by the grippers 202 is released, and a compressive force by the cross beams 113A, 113B may be applied.

According to other embodiments, the grippers 202 may apply a compressive force to the battery cell assembly 120_1 until the battery cell assembly 120_1 is seated on the base plate 111. The grippers 202 may be introduced into the accommodation space 110A between the cross beams 113A, 113B together with the battery cell assembly 120_1. Thereafter, the loading device 200 may retract the grippers 202 in the Z direction away from the base plate 111 to release the compressive force applied to the battery cell assembly 120_1 by the grippers 202.

Referring to FIGS. 8 and 14 to 16, in S40, the pins 1253, 1254 of the battery cell assembly 120_1 may be inserted into the slots 1133, 1134 of the corresponding cross beams 113A, 113B.

Each of the first pins 1253 of the end plate 125A may be coupled to each of the first slots 1133 of the cross beam 113A. Each of the second pins 1254 of the end plate 125A may be coupled to each of the second slots 1134 of the cross beam 113A. Similarly, each of the first pins 1253 of the end plate 125B may be coupled to each of the first slots 1133 of the cross beam 113B. Each of the second pins (not shown) of the end plate 125B may be coupled to each of the second slots (not shown) of the cross beam 113B.

Along with this, each of the first spacers 1251 of the end plate 125A may be coupled to each of the first recesses 1131 of the cross beam 113A. Each of the second spacers 1252 of the end plate 125A may be coupled to each of the second recesses 1132 of the cross beam 113A. Similarly, each of the first spacers 1251 of the end plate 125B may be coupled to each of the first recesses (not shown) of the cross beam 113B. Each of the second spacers (not shown) of the end plate 125B may be coupled to each of the second recesses (not shown) of the cross beam 113B. Thereby, the battery cell assembly 120_1 can be respectively coupled with the cross beams 113A, 113B.

As the spacers 1251, 1252 are inserted into the corresponding recesses 1131, 1132 and the pins 1253, 1254 are inserted into the corresponding slots 1133, 1134, the compressive force applied from the cross beams 113A, 113B to the battery cell assembly 120_1 may be released. As the compressive force applied to the battery cell assembly 120_1 is released, the battery cell assembly 120_1 may be restored to its length in the X direction before the compressive force was applied.

Although FIGS. 9 to 16 illustrate an embodiment in which the loading device 200 loads one battery cell assembly 120_1, the present disclosure is not limited thereto. In other embodiments, a loading device 200 that handles a plurality of battery cell assemblies 120_1, 120_2 at once may also be used.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A battery pack comprising:
a base plate;
a battery cell assembly on the base plate, wherein the battery cell assembly comprises a cell stack comprising battery cells stacked in a first direction, and an end plate on a side surface of the cell stack in the first direction; and
a cross beam on the base plate and extending in a second direction perpendicular to the first direction, wherein
the end plate comprises a plurality of first pins on a surface of the end plate facing the cross beam, and first spacers extending from each of the first pins in a third direction perpendicular to each of the first and second directions, wherein
the cross beam comprises a plurality of first slots penetrating an outer wall of the cross beam facing the end plate, and first recesses extending from each of the first slots in the third direction.

2. The battery pack of claim 1, wherein
each of the first pins is configured to be coupled to a corresponding one of the first slots, and
each of the first spacers is configured to be coupled to a corresponding one of the first recesses.

3. The battery pack of claim 1, wherein
a width of each of the first pins in the first direction is different from a width of each of the first spacers in the first direction.

4. The battery pack of claim 3, wherein
a width of each of the first pins in the first direction is greater than a width of each of the first spacers in the first direction.

5. The battery pack of claim 1, wherein
each of the first spacers has a width in the first direction corresponding to a depth of each of the first recesses in the first direction.

6. The battery pack of claim 1, wherein
the end plate further comprises a plurality of second pins on the surface of the end plate facing the cross beam, and second spacers extending from each of the second pins in the third direction, wherein
the cross beam further comprises a plurality of second slots penetrating the outer wall of the cross beam facing the end plate; and second recesses extending from each of the second slots in the third direction, wherein
each of the second pins is positioned at a different level in the third direction from each of the first pins, and
each of the second slots is positioned at a different level in the third direction from each of the first slots.

7. The battery pack of claim 6, wherein
the first pins and the second pins are arranged alternately, wherein
the first spacers and the second spacers are arranged alternately, wherein
the first slots and the second slots are arranged alternately, and
the first recesses and the second recesses are arranged alternately.

8. The battery pack of claim 6, wherein
a length of each of the second spacers in the third direction is smaller than a length of each of the first spacers in the third direction, and
a length of each of the second recesses in the third direction is smaller than a length of each of the first recesses in the third direction.

9. The battery pack of claim 1, wherein
each of the first spacers and each of the first recesses extend in a direction away from the base plate.

10. The battery pack of claim 1, wherein
each of the first recesses comprises an expansion part in which the width in the second direction increases in a direction toward an end thereof distant from the base plate.

11. The battery pack of claim 1, further comprising:
a welding layer between the cross beam and the base plate.

12. A battery pack manufacturing method comprising:
applying a compressive force to a battery cell assembly in a direction in which end plates of the battery cell assembly approach each other;
aligning the battery cell assembly with respect to a pack housing so that pins of the end plates of the battery cell assembly and recesses of cross beams of the battery pack are aligned in a vertical direction; and
introducing the battery cell assembly into an accommodation space of the battery pack such that the pins of each of the end plates move along the recesses of each of the cross beams.

13. The battery pack manufacturing method of claim 12, further comprising:
after the step of introducing the battery cell assembly into the accommodation space,
inserting the pins of each of the end plates into corresponding ones of slots of the cross beams connected to each of the recesses.

14. The battery pack manufacturing method of claim 13, further comprising:
after the step of introducing the battery cell assembly into the accommodation space, and before the step of inserting the pins of the end plate into the slots of the cross beams,
releasing the compressive force applied to the battery cell assembly.

15. The battery pack manufacturing method of claim 13, wherein
in the step of inserting the pins of the end plate into the slots of the cross beams,
spacers respectively connected to the pins of the end plates are coupled to corresponding ones of the recesses of the cross beams.
